# EUROPEAN PATENT SPECIFICATION

(11) **EP 0 716 260 B1**
(45) Date of publication and mention of the grant of the patent: **19.04.2000**
(21) Application number: 96102252.2
(22) Date of filing: 21.12.1991
(51) Int. Cl.: F16L 21/02, B28B 21/56

(54) **A pipe joint**
Rohrverbindung
Raccord de tuyaux

(30) Priority: 01.03.1991 SE 9100583
(43) Date of publication of application: 12.06.1996
(62) Divisional of application: 91122045.7
(73) Proprietor: Forsheda AB, S-330 12 Forsheda (SE)
(72) Inventor: Andersson, Joakim, S-334 32 Anderstorp (SE)
(74) Representative: Linde, Leif

(56) References cited:
- EP-A- 0 011 919
- EP-A- 0 276 785
- EP-A- 0 343 677

## Description

The present invention relates to a pipe joint.

A previously known pipe joint comprises two sealing surfaces provided at separate end portions of two pipes, the sealing surfaces being adapted to be axially forced together to a position in which one of the sealing surfaces encloses the other sealing surface for constituting the pipe joint. Thereby, the sealing surfaces form a substantially cylindrical or somewhat conical sealing space. The pipe joint also comprises a sealing device which after the sealing surfaces have been forced together is positioned in said sealing space. The sealing device comprises a sealing ring which before the sealing surfaces are forced together is positioned axially indisplaceable in relation to one of the sealing surfaces and is compressed between the sealing surfaces while the sealing surfaces are forced together, the sealing ring thereby being axially displaced in relation to the other sealing surface.

Pipe joints of this kind are previously known from for example the Swedish patent specifications Nos 7809451-3 and 8105254-0. The pipe joints shown and described in these patent specifications comprise a sealing ring consisting of rubber or rubber-elastic material which is positioned at the inner surface of a concrete pipe socket. The sealing ring has a main body and a fastening portion manufactured in one unit and moulded into the pipe material. The inner surface of the pipe socket forming the sealing surface thereof has axially outside the sealing ring a portion of less diameter than the portion positioned axially inside the sealing ring. This difference between the diameters provides an undercut space positioned axially inside the sealing ring, in which space the main body of the sealing ring can be partially received, i.e. when the main body is compressed between the sealing surface of the socket and the sealing surface formed by the outer surface of the spigot end is introduced into the socket.

A drawback of pipe joints of the kind described above is unsatisfactory properties with regard to the capacity of taking up and a standing transverse loads, i.e. such loads on the pipes which cause that the pipe end portions forming the pipe joint are displaced from a concentric towards an eccentric position. Thus, the transverse loads provide that the sealing surfaces are locally displaced towards each other to a position in which the sealing surfaces locally engages each other and/or the sealing ring is locally subjected to a compression of such a magnitude that the transverse loads are balanced. In order to solve this problem it is previously known to provide the pipe end portion on which the sealing ring is positioned with a circumferential cavity positioned in connection with the sealing ring and adapted when the joint is provided by axially forcing the sealing surfaces together partly to take up the elastic material of the sealing ring and to arrange the pipe joint so that the sealing surfaces after the establishment of the pipe joint form sealing space sections which on both sides of the sealing ring in the axial direction of the joint have a small and substantially uniform space width for providing transverse load carrying supports on either side of the sealing ring. Thereby, it is also at transverse loads of substantial magnitudes possible to avoid such damages to the pipes and the sealing ring which would jeopardize the tightness of the pipe joint.

In a pipe joint of said kind it is also previously known to arrange elastic material in the sealing space sections positioned on either side of the sealing ring and having small and substantially equal space widths. Thereby there is provided a distribution of the pressure between the transverse load receiving supports on either side of the sealing ring which further reduces the risk of damages to the pipe material at large transverse loads.

It is a drawback that there is in a pipe joint of the kind described above at outdoor storing of the pipes easily collected dirt and ice in the cavity arranged in connection with the sealing ring. If the dirt or ice is not removed prior to the pipe jointing the elastic material of the sealing ring is prevented from being displaced into the cavity which makes it impossible or at least difficult to conduct the pipe jointing. Of course it is a time-consuming and a difficult operation to remove dirt and ice from the cavity prior to the pipe jointing.

A pipe joint according to the preamble of claim 1 is known from EP-A-0 343 677.

The object of the invention is to provide a pipe joint which has improved properties in said respects.

In order to comply this object the pipe joint according to the invention comprises the features of claim 1.

Thus, in the pipe joint according to the invention the sealing ring and the cavity arranged in connection therewith will take a position in which they are protected against dirt and ice beneath the covering formed by the elastic material.

In the pipe joint according to the invention it is possible to arrange the elastic material positioned in the sealing space sections as two layers of elastic material contacting each other. After the pipe jointing one of the layers contacts one of the sealing surfaces and the other layer contacts the sealing ring and the other sealing surface. The layers of elastic material are also adapted to facilitate the displacement for forcing together the sealing surfaces by the fact that the layers slide along each other while substantially indisplacably engaging the sealing surfaces and the sealing ring. The layers of elastic material are suitably formed by a thin-walled hose arranged in a flat position.

The invention is described in the following with reference to the accompanying drawings.

Fig. 1 is an axial section of a pipe joint according to the invention before the jointing has taken place.

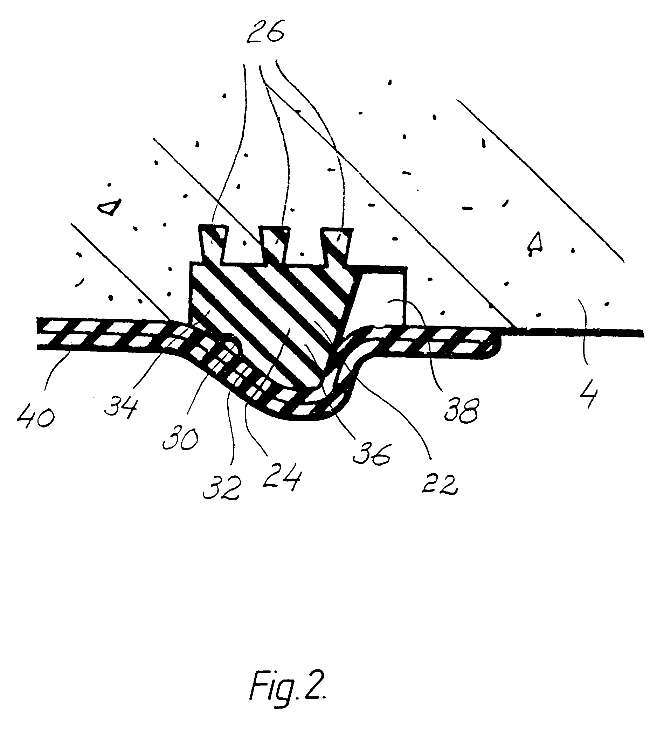

Fig. 2 shows a part of the axial section of Fig. 1 on an enlarged scale.

Fig. 3 is a section corresponding to Fig. 1 after the joint has been completed.

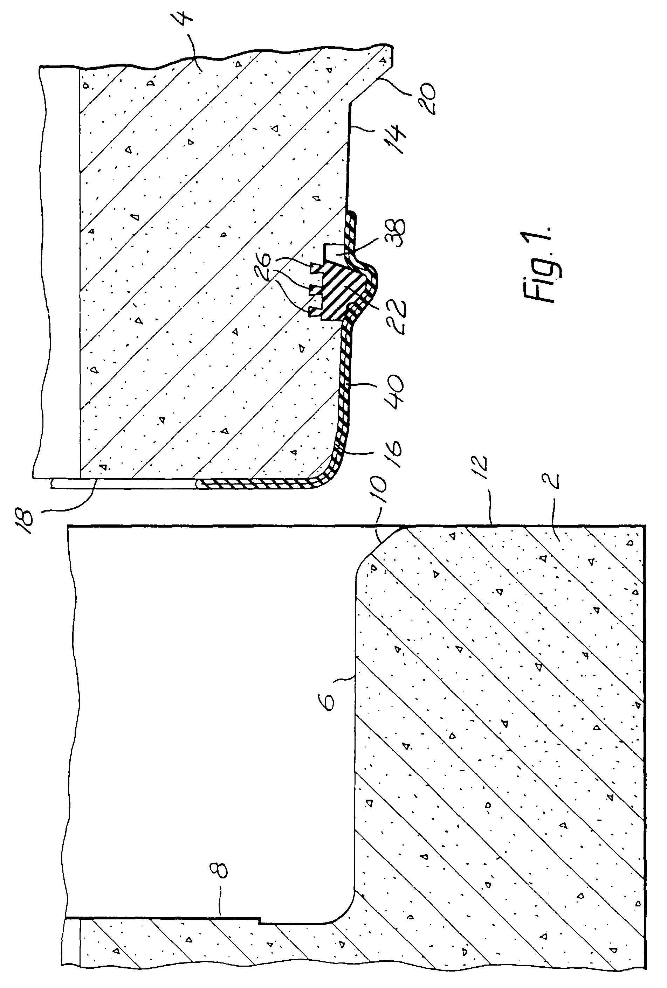

Fig. 1 is a section of the walls of the end portions of two concrete pipes adapted to form a pipe joint according to the invention. One of the pipes forms at its end portion a socket 2 while the other pipe forms at its end portion a spigot 4. The socket 2 has an inner sealing surface 6 which merges into an inner annular surface 8 through a chamfer. The axially outer portion of the sealing surface 6 merges into an annular end surface 12 through a conical entrance surface 10. The sealing surface 6 is substantially cylindrical with uniform diameter but can also be slightly conical so that it has a somewhat increasing diameter in the direction towards the end surface 12.

The spigot end 4 has an outer sealing surface 14 which at its axially outer end connects with a conical entrance surface 16 in turn mergin into the free end surface 18 of the spigot end 4. At its axially inner end the sealing surface 14 connects with a conical surface 20 in turn merging into the outer envelope surface of the pipe. The sealing surface 14 is slightly conical having increasing diameter from the entrance surface 16 in the direction of the conical surface 20. In the embodiment shown the sealing surface 14 has a conicity of 2°, and the entrance surface has a conicity of 13°.

On the spigot end 4 there is at the sealing surface 14 arranged a sealing ring 22 having a main body 24 and fastening portions 26 formed in one unit therewith. The fastening portions 26 having a dovetailed section extending around the outer periphery of the sealing ring 22 and are moulded into the concrete material forming the spigot end 4. The main body 24 of the sealing ring 22 is partly embedded in the concrete material of the spigot end 4 so that only a portion 28 of the main body 24 of the sealing ring 22 is positioned outside the plane of the sealing surface 14. The portion 28 of the sealing ring 22 positioned outside the sealing surface 14 forms a conical surface 32 which is provided with a circumferential groove 30 and has adjacent the portion of the sealing surface 14 positioned axially outside the sealing ring 22 the same diameter as this portion. The conical surface 32 has increasing diameter towards the inner portion of the spigot end. In the embodiment shown the conical surface 32 of the sealing ring 24 forms an angle of about 35° with the plane of a sealing surface 14. The groove 30 in the conical surface 32 defines two sections of the portion 28, a smaller, outer section 34 having a smaller diameter and a larger, inner section 36 having a larger diameter.

Axially inside the sealing ring 22 there is in the sealing surface 14 formed a circumferential cavity 38 having in the embodiment shown its bottom positioned in the same plane as the inner surface of the main body 24 of the sealing ring 22.

On the spigot end 4 there is also provided a sliding skin 40 consisting of a flattened, annular, thin-walled elastic material hose preferable consisting of rubber. In the position shown in Fig. 1 forming the starting position for forming the pipe joint according to the invention the sliding skin 40 is stretched around the axially outer portion of the sealing surface 14, including the sealing ring 22 and the cavity 38, the entering surface 16 and the free end surface 18 up to about the centre thereof. Thus, in this position the sliding skin 40 forms two thin layers of elastic material contacting each other and between which a lubricant is preferably positioned. The layers of the sliding skin can have a thickness of about 2 mm, so that the sliding skin has a total thickness of about 4 mm. In the flattened position the sliding skin has an axial dimension which is about the same as the axial dimension of the sealing surface 14 or somewhat smaller than this. In an embodiment of the invention the inner surfaces of the two layers of the sliding skin engaging each other can have a wave-shaped section so that the surfaces around the annular sliding skin form depressions and projections.

The covering constituted by the sliding skin 40 provides that the sealing ring 22 and the cavity 38 take a protected position beneath the sliding skin 40 prior to the establishment of the pipe joint, i.e. at transportation and storage of the pipes which shall form the pipe joint. This prevents collection of dirt and ice in the cavity 38 making the time-consuming work for removing such dirt and ice prior to the pipe jointing unnecessary. This is otherwise necessary if the pipe jointing shall take place in a correct way as the pipe jointing presupposes that the material of the sealing ring 22, as will be described in the following, at the pipe jointing is partly displaced into the cavity 38.

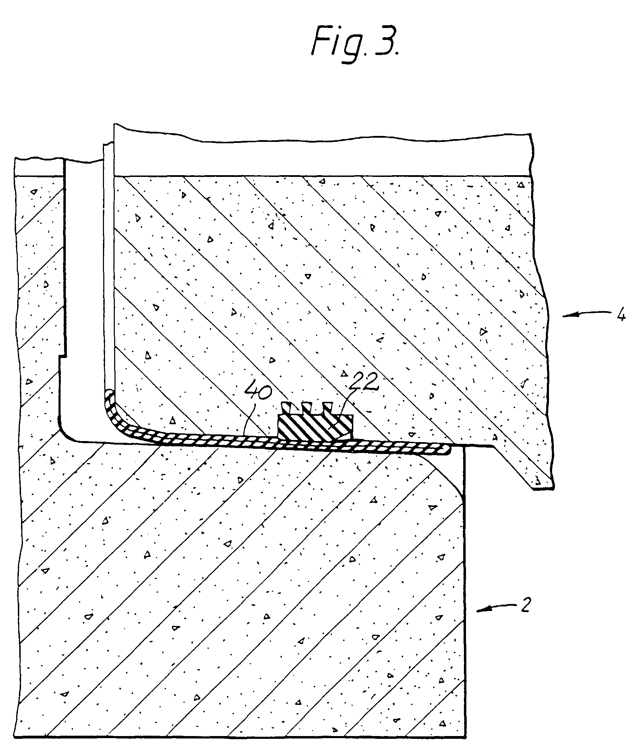

At the displacement of the sealing surfaces 6 and 14 for forcing the surfaces together the sliding skin 48 will roll between the sealing surface 6 on one side and the sealing surface 14 and the sealing ring 22 on the other side. When the sealing surface 6 is forced against the sealing ring 22 through the sliding skin the main body 24 of the sealing ring will successively be compressed until the sealing ring takes the position shown in Fig. 3. According to Fig. 3 the main body 24 of the sealing ring 22 has been compressed in such a way that the circumferential cavity 38 positioned adjacent the sealing ring 22 has been completely filled up by the elastic material of the sealing ring. The whole sealing space, i.e. the space between the sealing surfaces 6 and 14, is of substantially the same width and is substantially completely filled by the sliding skin 40.

The groove 30 in the conical outer surface 32 of the sealing ring 22 provides that the portion 36 of the main body 24 having the largest diameter can at the engagement with sealing surface 6 of the socket through the sliding skin 40 turn somewhat to a position in which the portion of the conical surface 32 belonging to said portion 36 of the mainbody is parallell with the opposite surface of the sliding skin so that the contact surface between the sealing ring and the sliding skin will have a substantial size in the axial direction.

When the pipe joint according to the invention is subjected to transverse loads, i.e. a loading on the pipes striving to displace the pipe end portions connected with each other from the concentric position so that the sealing space locally takes a smaller width, the stresses createad thereby will be distributed over substantially the whole length of the space between the sealing surfaces 6 and 14 with the sliding skin 40 constituting an intermediate liner. This provides a distribution of the transverse load over a large surface and a corresponding less stress on the sealing surfaces and the socket and spigot end of the pipe. The sliding skin 40 thereby has a double function of facilitating the mounting movement when the pipe joint is established and providing a distribution of the stresses when the joint is subjected to transverse loads. The recesses and projections at the inner surfaces of the two layers of the sliding skin, if any, will engage each other so as to provide a certain locking action obstructing the separation of the pipe joint. The design of the pipe joint according to the invention also provides that the elastic material of the joint, i.e. the material of the sealing ring and the sliding skin, independently of the magnitude of the transverse loads will be subjected to a restricted compression obviating such stresses on the elastic material that may lead to a deterioration of the sealing properties thereof.

The invention can be modified within the scope of the following claims.

## Claims

1. A pipe joint comprising two sealing surfaces (6, 14) positioned on each of two end portions (2, 4) of two pipes, the sealing surfaces being adapted axially to be forced together to a position in which one of the sealing surfaces encloses the other sealing surface while forming a cylindrical or somewhat conical sealing space and further comprising a sealing device (22) which is connected with one of the pipe end portions and is compressed in the sealing space, the sealing surfaces (6, 14) being adapted after the establishment of the pipe joint to provide sealing space sections at each side of the sealing ring, in which sealing space sections elastic material (40) is positioned, and the sealing ring (22) and the elastic material (40) being prior to the pipe jointing positioned on the same pipe end portion, **characterized** in that the pipe end portion with which the sealing ring (22) is connected has in connection with the sealing ring a circumferential cavity (38) adapted partially to receive the elastic material of the sealing ring (22) when the joint is provided by axially forcing the sealing surfaces (6, 14) together and that the elastic material (40) before the sealing surfaces (6, 14) are axially forced together forms a covering over the sealing ring (22) and the cavity (38) positioned adjacent the sealing ring so as to protect the sealing ring and prevent that dirt and other foreign matters are collected in the cavity prior to the pipe jointing.

2. A pipe joint as claimed in claim 1, **characterized** in that the pipe end portions are constituted by a socket (2) and a spigot end (4) and that the sealing ring (22) and the elastic material (40) are positioned on the spigot end.

3. A pipe joint as claimed in claim 1 or 2, **characterized** in that the elastic material (40) is positioned in the sealing space sections positioned on either side of the sealing ring (22).

4. A pipe joint as claimed in claim 3, **characterized** in that the sealing space has a small space width over the main part of its axial length and that the elastic material (40) fills at least the main part of the sealing space.

5. A pipe joint as claimed in claim 4, **characterized** in that the elastic material (40) consists of two elastic material layers contacting each other and each of the sealing surfaces (6, 14) and the sealing ring (22), the elastic material layers being adapted when the sealing surfaces are axially forced together to slide along each other while substantially indisplaceably engaging the sealing surfaces (6, 14) and the sealing ring (22).

6. A pipe joint as claimed in claim 5, **characterized** in that the elastic material layers (40) contacting each other are formed by a flattened, thin-walled hose.

7. A pipe joint as claimed in any of claims 5 and 6, **characterized** in that the elastic material layers (40) contacting each other are of annular shape and are stretched around the spigot end (4).

8. A pipe joint as claimed in any of claims 5 - 7, **characterized** in that the elastic material layers (40) contacting each other have an axial length which is somewhat less than the axial length of the sealing surfaces (6, 14).

9. A pipe joint as claimed in any of the preceding claims, **characterized** in that a main body (24) of the sealing ring (22) has a circumferential groove (30) adapted to facilitate that the part of the sealing ring positioned adjacent the cavity (38) is displaced into the cavity when the sealing surfaces (6, 14) are axially forced together.

## Patentansprüche

1. Rohrverbindung mit zwei Dichtflächen (6, 14), die auf jedem von zwei Endteilen (2, 4) zweier Rohre angeordnet sind, wobei die Dichtflächen geeignet ausgestaltet sind, um axial zu einer Position zusammengedrückt zu werden, in welcher eine der Dichtflächen die andere Dichtfläche einschließt, während ein zylindrischer oder etwas konischer Dichtraum gebildet wird, und ferner mit einer Dichtvorrichtung (22), die mit einem der Rohrendteile verbunden und in dem Dichtraum zusammengedrückt wird, wobei die Dichtflächen (6, 14) geeignet ausgestaltet sind, nach dem Bilden der Rohrverbindung Dichtraumabschnitte auf jeder Seite des Dichtringes vorzusehen, wobei in den Dichtraumabschnitten elastisches Material (40) angeordnet ist und der Dichtring (22) und das elastische Material (40) vor dem Rohrverbinden auf demselben Rohrendteil angeordnet sind, **dadurch gekennzeichnet, daß** das Rohrendteil, mit welchem der Dichtring (22) verbunden ist, in Verbindung mit dem Dichtring einen Umfangshohlraum (38) hat, der geeignet ausgestaltet ist, um teilweise das elastische Material des Dichtringes (22) aufzunehmen, wenn die Verbindung durch axiales Zusammendrücken der Dichtflächen (6, 14) vorgesehen wird, und daß das elastische Material (40), bevor die Dichtflächen (6, 14) axial zusammengedrückt werden, eine Abdeckung über dem Dichtring (22) und dem Hohlraum (38) bildet, welcher neben dem Dichtring so angeordnet ist, daß der Dichtring geschützt wird und verhindert wird, daß Schmutz und andere Fremdteile vor dem Rohrverbinden in dem Hohlraum gesammelt werden.

2. Rohrverbindung nach Anspruch 1, dadurch gekennzeichnet, daß die Rohrendteile durch eine Muffe (2) und ein Zapfenende (4) gebildet werden und daß der Dichtring (22) und das elastische Material (40) auf dem Zapfenende angeordnet sind.

3. Rohrverbindung nach Anspruch 1 oder 2, dadurch gekennzeichnet, daß das elastische Material (40) in den Dichtraumabschnitten angeordnet ist, die auf jeder Seite des Dichtringes (22) angeordnet sind.

4. Rohrverbindung nach Anspruch 3, dadurch gekennzeichnet, daß der Dichtraum eine kleine Raumbreite über den Hauptteil seiner axialen Länge hat und daß das elastische Material (40) mindestens den Hauptteil des Dichtraumes füllt.

5. Rohrverbindung nach Anspruch 4, dadurch gekennzeichnet, daß das elastische Material (40) aus zwei elastischen Materiallagen besteht, die einander und jede der Dichtflächen (6, 14) und den Dichtring (22) berühren, wobei die elastischen Materiallagen geeignet ausgestaltet sind, entlang einander zu gleiten, wenn die Dichtflächen radial zusammengedrückt werden, während sie im wesentlichen unverschiebbar mit den Dichtflächen (6, 14) und dem Dichtring (22) in Eingriff stehen.

6. Rohrverbindung nach Anspruch 5, dadurch gekennzeichnet, daß die elastischen Materiallagen (40), die einander berühren, durch einen flachgelegten, dünnwandigen Schlauch gebildet sind.

7. Rohrverbindung nach einem der Ansprüche 5 und 6, dadurch gekennzeichnet, daß die elastischen Materiallagen (40), die einander berühren, Ringgestalt haben und um das Zapfenende (4) gestreckt sind.

8. Rohrverbindung nach einem der Ansprüche 5 bis 7, dadurch gekennzeichnet, daß die elastischen Materiallagen (40), die einander berühren, eine axiale Länge haben, die etwas kleiner ist als die axiale Länge der Dichtflächen (6, 14).

9. Rohrverbindung nach einem der vorhergehenden Ansprüche, dadurch gekennzeichnet, daß ein Hauptkörper (24) des Dichtringes (22) eine Umfangsnut (30) hat, die geeignet ausgestaltet ist zu ermöglichen, daß derjenige Teil des Dichtringes, welcher neben dem Hohlraum (38) angeordnet ist, in den Hohlraum verschoben wird, wenn die Dichtoberflächen (6, 14) axial zusammengedrückt werden.

## Revendications

1. Raccord de tuyaux comprenant deux surfaces d'étanchéité (6, 14) positionnées sur chacune des deux parties d'extrémité (2, 4) de deux tuyaux, les surfaces d'étanchéité étant adaptées pour être poussées axialement l'une vers l'autre dans une position dans laquelle l'une des surfaces d'étanchéité entoure l'autre surface d'étanchéité tout en formant un espace d'étanchéité cylindrique ou légèrement conique, et comprenant en outre un dispositif d'étanchéité (22) qui est relié à l'une des parties d'extrémité de tuyau et est comprimé dans l'espace d'étanchéité, les surfaces d'étanchéité (6, 14) étant adaptées, après l'établissement du raccord de tuyaux, pour former des sections d'espace d'étanchéité de chaque côté de l'anneau d'étanchéité dans lesquelles est positionné un matériau élastique (40), et l'anneau d'étanchéité (22) et le matériau élastique (40) étant, avant le raccordement de tuyaux, positionnés sur la même partie d'extrémité de tuyau, caractérisé en ce que la partie d'extrémité de tuyau à laquelle est relié l'anneau d'étanchéité (22) a en correspondance avec l'anneau d'étanchéité une cavité circonférentielle (38) adaptée pour recevoir partiellement le matériau élastique de l'anneau d'étanchéité (22) lorsque le raccord est réalisé en poussant axialement les surfaces d'étanchéité (6, 14) l'une vers l'autre et en ce que le matériau élastique (40) avant que les surfaces d'étanchéité (6, 14) ne soient poussées axialement l'une vers l'autre forme une garniture sur l'anneau d'étanchéité (22) et sur la cavité (38) placée de façon adjacente à l'anneau d'étanchéité de manière à protéger l'anneau d'étanchéité et à empêcher l'accumulation d'impuretés ou autres matières étrangères dans la cavité avant le raccordement de tuyaux.

2. Raccord de tuyaux selon la revendication 1, caractérisé en ce que les parties d'extrémité de tuyau sont constituées par un bout femelle (2) et un bout mâle (4) et en ce que l'anneau d'étanchéité (22) et le matériau élastique (40) sont positionnés sur le bout mâle.

3. Raccord de tuyaux selon la revendication 1 ou 2, caractérisé en ce que le matériau élastique (40) est positionné dans les sections d'espace d'étanchéité placées de chaque côté de l'anneau d'étanchéité (22).

4. Raccord de tuyaux selon la revendication 3, caractérisé en ce que l'espace d'étanchéité a une petite largeur d'espace sur la partie principale de sa longueur axiale et en ce que le matériau élastique (40) remplit au moins la partie principale de l'espace d'étanchéité.

5. Raccord de tuyaux selon la revendication 4, caractérisé en ce que le matériau élastique (40) consiste en deux couches de matériau élastique en contact l'une avec l'autre et avec chacune des surfaces d'étanchéité (6, 14) et avec l'anneau d'étanchéité (22), les couches de matériau élastique étant adaptées, quand les surfaces d'étanchéité sont poussées axialement l'une vers l'autre, pour glisser le long l'une de l'autre tout en retenant pratiquement sans déplacement les surfaces d'étanchéité (6, 14) et l'anneau d'étanchéité (22).

6. Raccord de tuyaux selon la revendication 5, caractérisé en ce que les couches de matériau élastique (40) en contact l'une avec l'autre sont formées par un tuyau aplati, à paroi mince.

7. Raccord de tuyaux selon l'une des revendications 5 et 6, caractérisé en ce que les couches de matériau élastique (40) en contact l'une avec l'autre ont une forme annulaire et sont étirées autour du bout mâle (4).

8. Raccord de tuyaux selon l'une des revendications 5 à 7, caractérisé en ce que les couches de matériau élastique (40) en contact l'une avec l'autre ont une longueur axiale qui est légèrement inférieure à la longueur axiale des surfaces d'étanchéité (6, 14).

9. Raccord de tuyaux selon l'une quelconque des précédentes revendications, caractérisé en ce qu'un corps principal (24) de l'anneau d'étanchéité (22) comporte une rainure circonférentielle (30) adaptée pour faciliter que la partie de l'anneau d'étanchéité positionnée de façon adjacente à la cavité (38) soit déplacée dans la cavité lorsque les surfaces d'étanchéité (6, 14) sont poussées axialement l'une vers l'autre.
